# EUROPÄISCHE PATENTSCHRIFT

(11) **EP 2 090 143 B1**
(45) Veröffentlichungstag und Bekanntmachung des Hinweises auf die Patenterteilung: **27.02.2013**
(21) Anmeldenummer: 06830599.4
(22) Anmeldetag: 13.12.2006
(51) Int. Cl.: H05B 41/292

(54) **SCHALTUNGSANORDNUNG ZUM BETRIEB VON ENTLADUNGSLAMPEN UND VERFAHREN ZUM BETRIEB VON ENTLADUNGSLAMPEN**
CIRCUIT ARRANGEMENT FOR OPERATION OF DISCHARGE LAMPS, AND METHOD FOR OPERATION OF DISCHARGE LAMPS
INSTALLATION DE CIRCUIT POUR LA COMMANDE DE LAMPES À DÉCHARGE ET PROCÉDÉ DE COMMANDE DE LAMPES À DÉCHARGE

(43) Veröffentlichungstag der Anmeldung: 19.08.2009
(73) Patentinhaber: OSRAM GmbH, 81543 München (DE)
(72) Erfinder: REITER, Bernhard, 81541 München (DE); REHN, Henning, 13437 Berlin (DE); HUBER, Andreas, 82194 Gröbenzell (DE); BRÜCKEL, Martin, 518053 Shenzhen (CN); BREUER, Christian, Newburyport, MA 01950 (US)
(86) Internationale Anmeldenummer: PCT/EP2006/069665
(87) Internationale Veröffentlichungsnummer: WO 2008/071232

(56) Entgegenhaltungen:
- EP-A- 1 624 733
- EP-A1- 1 152 645
- WO-A-2004/002200
- WO-A-2006/016335
- US-A- 5 917 558
- US-A1- 2003 098 659
- US-A1- 2003 160 577

## Beschreibung

### Technisches Gebiet

Die Erfindung betrifft eine Schaltungsanordnung zum Betrieb von Entladungslampen, insbesondere von Hoch- und Höchstdruck-Entladungslampen, wie sie in Geräten zur Projektion von Bildern verwendet werden. Der Erfindung beschäftigt sich mit dem Problem von Flackererscheinungen, die durch die Entladungslampen verursacht werden. Insbesondere beschäftigt sich die Erfindung mit Problemen, die durch DC Strom zur Reduzierung von Flackererscheinungen auftreten.

### Stand der Technik

Beim Betrieb von Entladungslampen, die im folgenden auch kurz Lampe genannt werden, gibt es das Phänomen des Wachstums von Elektrodenspitzen. Material, das von den Elektroden an einer Stelle abdampft wird an bevorzugten Stellen auf der Elektrode wieder abgeschieden und führt zur Ausbildung von Elektrodenspitzen. Diese Elektrodenspitzen haben zunächst den Vorteil, dass der Plasma-Bogen der in der Lampe erzeugten Bogenentladung einen stabilen Ansatzpunkt auf der Elektrode findet und nicht zwischen mehreren Ansatzpunkten springt. Dieses Springen des Entladungspunktes wird auch Bogenspringen bezeichnet und äußert sich in einem Flackern der Lampe. Dies stört besonders, wenn das Licht der Lampe zur Projektion von Bildern benutzt wird.

Der Ansatzpunkt des Bogens bildet sich nur aus, auf einer Elektrode, die als Kathode wirkt. Der Ansatz des Bogens auf der Anode ist flächig. Bei Lampen, die mit Wechselstrom betrieben werden, ist deshalb das Bogenspringen ein verbreitetes Problem, da mit jedem Polaritätswechsel der Bogen auf der von der Anode zur Kathode wechselnden Elektrode einen Ansatzpunkt finden muss. Die oben beschriebenen Elektro- - denspitzen bilden einen bevorzugten Ansatzpunkt für den Bogen und verringern somit ein Bogenspringen.

Durch die Elektrodenspitzen können allerdings auch Probleme auftreten. Unter ungünstigen Verhältnissen können sich zwei oder mehrere Elektrodenspitzen ausbilden. Dann kann es vorkommen, dass der Bogenansatz zwischen den verschiedenen Elektrodenspitzen springt.

In der Schrift EP 1 624 733 A2 (Suzuki) wird dieses Problem dadurch gelöst, dass die Betriebsfrequenz, d. h. die Frequenz des Wechselstroms, mit der die Lampe betrieben wird, für eine begrenzte Zeit reduziert wird. Dieses Verfahren wirkt dadurch, dass sich eine Elektrode, während sie als Anode wirkt, aufheizt und während sie als Kathode wirkt abkühlt. Man erhält eine Temperaturschwankung mit einem zeitlichen Verlauf, der der Betriebsfrequenz entspricht. Bei hohen Frequenzen stellt sich bedingt durch die thermische Kapazität der Elektroden eine mittlere Temperatur ein. Im so genannten Rechteckbetrieb werden die Lampen mit einem rechteckförmigen Strom mit einer Frequenz von typischerweise 200 bis 5000 Hz betrieben. Abhängig von der Bauweise der Lampe kann es bereits bei 200 Hz zu einer merklichen Temperaturmodulation der Elektroden kommen. Bei starker Temperaturmodulation erreicht die Elektrode Temperaturen, bei denen die überzähligen Elektrodenspitzen abgeschmolzen werden.

Ein weiteres Problem entsteht, wenn die Elektrodenspitzen zu lang werden und damit der Plasma-Bogen zwischen den Elektroden kurz wird. Die Verkürzung des Plasmabogens führt zu einer reduzierten Brennspannung der Lampe. Da die Lampe im allgemeinen auf eine konstante Leistung geregelt wird, führt die reduzierte Brennspannung zu einem erhöhten Strom. Dies ist nachteilig für die Belastung von Bauteilen im Betriebsgerät für die Lampe. Bauteile, die an der Bereitstellung des Lampenstroms beteiligt sind müssen für einen erhöhten Lampenstrom ausgelegt werden oder werden erleiden Schaden.

Videoprojektoren benötigen häufig eine Lichtquelle die eine zeitliche Abfolge unterschiedlicher Farben aufweist. Wie in der Schrift US 5, 917, 558 (Stanton) beschrieben ist, kann dies durch ein rotierendes Farbrad erreicht werden, das aus dem Licht der Lampe wechselnde Farben filtert. Die Zeitdauern während derer das Licht eine bestimmte Farbe annimmt, brauch nicht zwangläufig gleich sein. Vielmehr kann über das Verhältnis dieser Zeitdauern zueinander eine gewünschte Farbtemperatur eingestellt werden, die sich für das projizierte Licht ergibt.

Üblicherweise wird die Lampe mit einem rechteckförmigen Lampenstrom betrieben. Als die o. g. Betriebsfrequenz wird der Kehrwert der Periodendauer des rechteckförmigen Lampenstroms verstanden. Der Lampenstrom wird im Stand der Technik aus einer Gleichstromquelle mit Hilfe einer Kommutierungseinrichtung erzeugt. Die Kommutierungseinrichtung besteht üblicherweise aus elektronischen Schaltern, die die Polarität der Gleichstromquelle im Takt des rechteckförmigen Lampenstroms kommutieren. Bei der Kommutierung sind Überschwinger in der Praxis nicht vollständig zu vermeiden. Deshalb wird im Stand der Technik der Zeitpunkt, zu dem eine Kommutierung stattfinden soll mit dem Zeitpunkt zu dem die Farbe des Lichts wechselt zusammengelegt, um die Überschwinger auszublenden. Dazu wird ein Sync-Signal bereitgestellt, das synchron zum o. g. Farbrad einen Sync-Impuls aufweist. Mit Hilfe des Sync-Signals wird der Farbwechsel und die Kommutierung des Lampenstroms synchronisiert.

Im Stand der Technik gemäß EP 1 624 733 A2 (Suzuki) wird wie oben erläutert die Betriebsfrequenz für eine begrenzte Zeit abgesenkt, damit zusätzliche Elektrodenspitzen abgeschmolzen werden. Dabei entsteht das Problem, dass durch die Frequenzabsenkung die Synchronisierung der Kommutierung mit dem Sync-Signal nicht mehr gewährleistet ist. Die Kommutierung kann damit auch zu einem Zeitpunkt geschehen, an dem gerade kein Farbwechsel erfolgt.

### Darstellung der Erfindung

Versuche habe gezeigt, dass während des Betriebs einer HochdruckEntladungslampe für Projektionszwecke Elektrodenspitzen aufwachsen, die die oben genannten Probleme verursachen: Flackern und hoher Lampenstrom. Das geregelte Abschmelzen dieser Elektrodenspitzen wirkt diesen beiden Problemen entgegen.

Die Aufgabe der vorliegenden Erfindung ist es, eine Schaltungsanordnung zum betrieb einer Entladungslampe bereitzustellen, bei der ein Abschmelzen von Elektrodenspitzen geregelt möglich ist und gleichzeitig die Kommutierung immer synchron zum Farbwechsel geschieht.

Weiterhin ist es eine Aufgabe der vorliegenden Erfindung ein zur oben genannten Aufgabe entsprechendes Verfahren bereitzustellen. Da die Erfindung auch einen Verfahrensaspekt hat, ist die folgende Beschreibung sowohl im Hinblick auf den Vorrichtungscharakter als auch den Verfahrenscharakter zu verstehen.

Die Aufgabe wird gelöst durch eine Schaltungsanordnung zum Betrieb einer Entladungslampe die eine Gleichstromquelle umfasst, die über eine Kommutierungseinrichtung an eine Entladungslampe koppelbar ist, wobei eine Steuereinrichtung mindestens eine Kommutierung der Kommutierungseinrichtung unterdrückt, falls ein Messwert, der ein Maß für die Größe von Elektrodenspitzen ist, einen vorgegebenen Schwellwert über- oder unterschreitet. Am Eingang der Kommutierungseinichtung ist die Gleichstromquelle angeschlossen. Die Kommutierungseinrichtung weist einen Ausgang auf, an den eine Entladungslampe angeschlossen werden kann. Die Kommutierungseinrichtung ist so gestaltet, dass sie die Gleichstromquelle mit dem Ausgang koppelt und die Polarität mit der die Gleichstromquelle mit dem Ausgang gekoppelt ist, durch eine Steuereinrichtung kommutierbar ist. Dies bedeutet, dass mit Hilfe der Kommutierungseinrichtung der Lampenstrom durch eine angeschlossene Entladungslampe kommutiert, das heißt umgepolt werden kann. Die Steuereinrichtung ist mit der Kommutierungseinrichtung gekoppelt und gibt die Stromrichtung durch die Lampe vor. Die zeitliche Abfolge der Kommutierungen legt die Betriebsfrequenz fest, mit der die Lampe betrieben wird.

Die Steuereinrichtung weist einen Sync-Eingang auf, an dem im Betrieb ein Sync-Signal anliegt, das Sync-Impulse enthält. Die Steuereinrichtung bewirkt nun eine Kommutierung, die synchron zu den Sync-Impulsen ist. Wie oben erläutert, wird der Farbwechsel des projizierten Lichts üblicherweise durch ein rotierendes Farbrad erzeugt. Wenn eine Kommutierung erfolgt, dann soll sie gleichzeitig mit einem Farbwechsel erfolgen. Es ist jedoch auch ein Farbwechsel denkbar, der ohne Kommutierung abläuft. Im allgemeinen ist des Sync-Signal so ausgelegt, dass es pro Umdrehung des Farbrads einen Sync-Impuls aufweist. Das Sync-Signal enthält also im allgemeinen nicht zu jedem Farbwechsel einen Sync-Impuls. Vielmehr ist die Abfolge der Farbwechsel bevorzugt in der Steuereinrichtung abgespeichert. Dies muss individuell auf das verwendete Farbrad abgestimmt sein. Insbesondere muss der Abstand der Farbwechsel auf dem Farbrad nicht konstant sein. Es sind auch Farbräder bekannt, die mehrere Sync-Impulse pro Umdrehung abgibt. Die entscheidende Funktion der Sync-Impulse ligt darin, dass die Steuereinrichtung Information über die momentane Stellung des Farbrades erhält und damit Information darüber hat, zu welchen Zeitpunkten Farbwechsel auftreten.

Unter der Synchronität zwischen den Sync-Impulsen und der Kommutierung der Polarität der Gleichstromquelle am Ausgang der Kommutierungseinrichtung ist demnach folgendes zu verstehen: In der Steuereinrichtung ist eine Abfolge von Zeitpunkten abgespeichert, zu denen eine Kommutierung erfolgen soll. Bei jedem Sync-Impuls startet die Steuereinrichtung eine Abfolge von Kommutierungen entsprechen den abgespeicherten Zeitpunkten. Die Zeitpunkte sind allerdings nicht fix, sondern werden normiert auf den zeitlichen Abstand zweier Sync-Impulse. Für ein gegebenes Farbrad fällt damit eine Kommutierung immer auf einen Farbwechsel, auch wenn sich die Drehzahl des Farbrads ändert. Eine erfindungsgemäße Unterdrückung von Kommutierungen greift in die Synchronisierung zwischen der Kommutierung und den Sync-Inpulsen nicht ein. Alle nicht unterdrückten Kommutierungen fallen mit einem Farbwechsel zeitlich zusammen.

Der oben angesprochene Messwert ist bevorzugt ein Wert der proportional der Lampenspannung ist. Üblicherweise wird für die Lampenspannung der Effektivwert angegeben. Beim Rechteckbetrieb ist dies einfach die Amplitude des Rechtecks. Die Lampenspannung sinkt ab, wenn die Elektrodenspitzen wachsen. Es wird demnach ein Minimalwert vorgegeben. Falls dieser unterschritten wird bedeutet dies, dass die Elektrodenspitzen zu lang für einen sichern Betrieb sind. In diesem Fall unterdrückt die Steuereinrichtung mindestens eine Kommutierung. Dadurch heizt sich mindestens eine Elektrode auf und die entsprechende Elektrodenspitze schmilzt ab worauf die Lampenspannung wieder ansteigt.

Es sind auch andere Messwerte möglich, die eine Information über die Länge der Elektrodenspitzen enthalten. Beispielsweise kann die Bogenlänge optisch vermessen werden. Da sowohl Messwerte denkbar sind, die mit länger werdenden Elektrodenspitzen kleiner werden als auch Messwerten bei denen dies umgekehrt ist, muss eine Kommutierung entweder unterdrückt werden wenn ein vorgegebener Schwellwert unter- oder überschritten wird. Entscheidend ist, dass eine Kommutierung unterdrückt wird, falls die Elektrodenspitzen zu lang werden.

Bislang wurde nur festgelegt, dass die Steuereinrichtung mindestens eine Kommutierung unterdrückt, falls die Elektrodenspitzen zu lange werden. Es wurde nichts darüber gesagt, wie viele Kommutierungen unterdrückt werden sollen. Die einfachste Vorgabe dazu, ist die Unterdrückung solange aufrecht zu erhalten, bis der Messwert den vorgegebenen Schwellwert über oder unterschreitet. Das Überschreiten bezieht sich selbstverständlich auf die Fälle, in denen ein Überschreiten zu lange Elektrodenspitzen bedeutet. Im umgekehrten Fall, beispielsweise bei der Lampenspannung als Messwert, wird die Kommutierung so lange unterdrückt, solange der Schwellwert unterschritten wird. Nachteilig bei dieser Lösung ist, dass während der Unterdrückung die Lampe mit Gleichstrom betrieben wird, deren Polarität zufällig ist. Es wird also nur eine Elektrodenspitze abgeschmolzen, was zu einer Unsymmetrie der der Elektrodenlage in der Lampe führen kann.

Vorteilhaft kann die Unterdrückung der Kommutierung auch über eine vorgegebene DC-Zeit erfolgen. Vorteilhaft wird die DC-Zeit so kurz gewählt, dass die Länge der Elektrodenspitze nach Ablauf der DC-Zeit noch nicht auf den gewünschten Wert abgesunken ist. Dann wird nach Ablauf der DC-Zeit erneut eine DC-Zeit gestaltet in der die jeweils andere Elektrodenspitze abgeschmolzen wird.

Anstatt der DC-Zeit kann auch eine Anzahl N vorgegeben werden, die die Anzahl der Kommutierungen vorgibt, die jeweils von der Steuereinrichtung unterdrückt wird. N wird dabei vorzugsweise so gewählt, dass nach der Unterdrückung von N Kommutierungen die jeweilige Elektrodenspitze noch nicht auf die gewünschte Länge abgeschmolzen ist. Nach den N Kommutierungen wird dann eine weitere Anzahl von N Kommutierungen unterdrückt, bei der dann die jeweils andere Elektrodenspitze abgeschmolzen wird.

Um den Abschmelzvorgang gleichmäßig auf die beiden Elektroden zu verteilen, kann die Unterdrückung von mehreren aufeinander folgenden Kommutierungen vorteilhaft durch das Aufheben einer Unterdrückung unterbrochen werden. Damit wechselt die Polarität des Lampenstroms und die jeweils andere Elektrodenspitze wird angeschmolzen. Die Anzahl der aufgehobenen Unterdrückungen darf natürlich nicht so groß sein, dass keine Abschmelzung der Elektrodenspitzen mehr stattfindet.

Bei Elektroden, die eine kleine thermischen Trägheit aufweisen, kann bereits das Unterdrücken von zwei aufeinander folgenden Kommutierungen zu einer Überhitzung der Elektrode führen. Dann ist es vorteilhaft nur jede m-te Kommutierung zu unterdrücken. Damit kann eine sehr präzise Steuerung des Abschmelzvorgangs vorgenommen werden.

Das Unterdrücken von aufeinander folgenden Kommutierungen führt zu einem Abschmelzen nur derjenigen Elektrode, die gerade Anode ist. Eine solche Folge von unterdrückten Kommutierungen kann DC-Phase genannt werden, da in der Zeit, in der die Kommutierungen unterdrückt werden, ein DC-Strom durch die Lampe fließt. Es ist vorteilhaft, dass bei aufeinander folgenden DC-Phasen die Elektroden abwechselnd die Anode bilden. Die Elektroden werden dadurch gleichmäßig abgeschmolzen. Diese bezüglich der Elektroden abwechselnde DC-Phase wird realisiert mit Hilfe einer Speichereinrichtung, die erlaubt festzustellen, welche Elektrode bei der letzten DC-Phase Anode war. Die folgende DC-Phase startet dann, wenn gerade die andere Elektrode Anode ist. Selbstverständlich kann eine DC-Phase auch nur aus einer unterdrückten Kommutierung bestehen.

Es ist üblich, die Kommutierungseinrichtung mit einer Vollbrücke bestehend aus 4 elektronischen Schaltern zu realisieren. Die Vollbrücke wird von der Gleichstromquelle gespeist und die Lampe liegt im Brückezweig. Diagonal liegende Schalter werden gleichzeitig geschaltet. Damit wird die Gleichstromquelle mit wechselnder Polarität mit der Lampe gekoppelt. Eine Kommutierung besteht aus dem Ausschalten in einer Diagonale liegender Schalter und dem Einschalten in der anderen Diagonale liegender Schalter. Zwei nebeneinander liegende Schalter sind mit dem Minuspol der Gleichstromquelle gekoppelt. Die anderen beiden mit dem Pluspol. Der Minuspol stellt in der Regel das Bezugspotenzial der Schaltungsanordnung dar. Die mit dem Minuspol gekoppelten Schalter sind deshalb meist problemlos ansteuerbar. Die mit dem Pluspol gekoppelten Schalter werden als hoch liegende Schalter bezeichnet und sind bekanntermaßen nur aufwändig ansteuerbar. Zur Ansteuerung der hoch liegenden Schalter wird eine Ladungspumpe benötigt. Diese wird nur während einer Kommutierung mit Energie versorgt.

Falls nun, wie es die vorliegende Erfindung vorschlägt, Kommutierungen unterdrückt werden, kann es vorkommen, dass die Ansteuerung der hoch liegenden Schalter nicht mehr gewährleistet ist. Vorteilhaft unterdrückt die Steuereinrichtung in diesem Fall nicht die Kommutierung, sondern erzeugt zwei schnell hinter einander folgende Kommutierungen. Durch diese schnell hinter einander folgenden Kommutierungen erhält die Ladungspumpe wieder Energie und die Ansteuerung der hoch liegenden Schalter ist sicher gestellt. Die zwei Kommutierungen müssen so schnell hintereinander folgen, dass die thermische Trägheit der Elektrodenspitzen eine Temperaturschwankung durch die zwei Kommutierungen unterbindet. Experimente haben gezeigt, dass bei einem zeitlichen Abstand von unter 30 Mikrosekunden die Temperatur der Elektrodenspitzen näherungsweise konstant bleibt.

### Kurze Beschreibung der Zeichnung(en)

Im Folgenden soll die Erfindung anhand von Ausführungsbeispielen näher erläutert werden. Die Figuren zeigen:
- Fig. 1: Eine Schaltungsanordnung zum Betrieb einer Hochdruckentladungslampe,
- Fig. 2: den zeitlichen Verlauf des Lampenstroms ohne Unterdrückung von Kommutierungen,

- Fig. 3: den zeitlichen Verlauf des Lampenstroms mit symmetrischer Unterdrückung von Kommutierungen,
- Fig. 4: den zeitlichen Verlauf des Lampenstroms mit symmetrischer Unterdrückung von Kommutierungen.

### Bevorzugte Ausführung der Erfindung

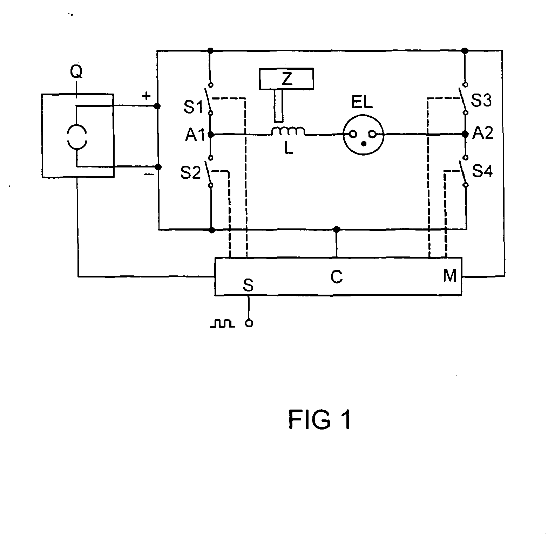

Figur 1 zeigt eine Schaltungsanordnung zum Betrieb einer Hochdruckentladungslampe, wie sie topologisch aus dem Stand der Technik bekannt ist. Die elektronischen Schalter S1, S2, S3 und S4 sind in einer Vollbrückenschaltung zwischen den Plus- und den Minuspol einer Gleichstromquelle Q geschaltet. Die Gleichstromquelle Q besteht im allgemeinen aus einem Tiefsetzer (Buck-Converter), der seine Energie beispielsweise aus einer Netzspannung bezieht. Im Brückenzweig, der zwischen den Knoten A1 und A2 liegt, ist die Lampe EL geschaltet. In Serie zur Lampe EL ist eine Wicklung L eines Zündtrafos geschaltet, in den eine Zündeinrichtung Z eine Spannung einkoppelt, die zur Zündung der Lampe dient.

Die Vollbrückenschaltung bildet die Kommutierungseinrichtung. Den Eingang der Kommutierungseinrichtung bilden ein oberes und ein unteres Potenzial der Vollbrückenschaltung, die mit dem Plus- und dem Minuspol der Gleichstromquelle Q verbunden sind. Den Ausgang der Kommutierungseinrichtung bildet der Brückenzweig zwischen den Knoten A1 und A2.

Sind die Schalter S 1 und S4 geschlossen, so fließt ein Lampenstrom vom Knoten A 1 zum Knoten A2. Nach einer Kommutierung sind die Schalter S3 und S2 geschlossen und es fließt ein Lampenstrom vom Knoten A2 zum Knoten A1. Damit wird ein rechteckformiger Strom in der Lampe EL erzeugt.

Gesteuert werden die Schalter von der Steuereinrichtung C. Gestrichelt sind die Ansteuerleitungen von der Steuereinrichtung C zu den Schaltern eingezeichnet. Die hoch liegenden Schalter S1 und S3 benötigen zur Ansteuerung eine Ladungspumpe, die in der Steuereinrichtung C mit enthalten sein kann und nicht dargestellt ist.

Über einen Messeingang M wird der Steuereinrichtung die Eingangsspannung der Vollbrücke zugeführt, die der Lampenspannung entspricht. Unterschreitet die Lampenspannung einen vorgegebenen Schwellwert, so unterdrückt die Steuereinrichtung C mindestens eine Kommutierung.

An einem Sync-Eingang S liegt ein Sync-Signal an das vom Antrieb eines nicht dargestellten, rotierenden Farbrades bereit gestellt wird. Eine Verbindung zwischen der Steuereinrichtung C und der Gleichstromquelle Q deutet an, dass die Steuereinrichtung C auch zur Regelung des Lampenstroms dienen kann.

In der Praxis ist es üblich, die Steuereinrichtung mit Hilfe eines Microcontrollers zu realisieren. Der Messeingang und der Sync-Eingang führen zu einem Analog- bzw. Digitaleingang des Microcontrollers. Über bekannte Treiberschaltungen steuert der Microcontroller die elektronischen Schalter, die im allgemeinen MOSFETS sind. Der Großteil der Erfindung ist in der Software des Microcontrollers realisiert.

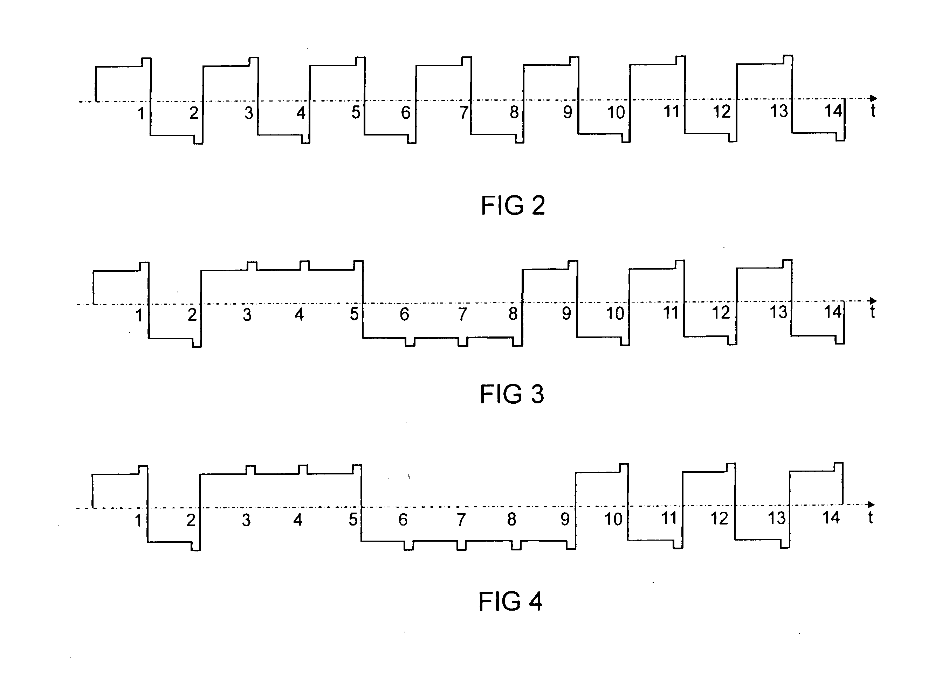

In Figur 2 ist der zeitliche Verlauf des Lampenstrom dargestellt ohne dass eine Unterdrückung der Kommutierung stattfindet. Die Kommutierungen sind mit Ziffern 1 bis 14 nummeriert. Unmittelbar vor der Kommutierung ist der Lampenstrom pulsförmig erhöht. Dabei handelt es sich um eine Maßnahme zur Verringerung von Flackererscheinungen, wie sie beispielsweise in der Schrift WO 95/35645 beschrieben wird. Diese Maßnahme ist unabhängig von der Unterdrückung von Kommutierungen gemäß der vorliegenden Erfindung. Die Frequenz des rechteckförmigen Verlaufs des Stroms liegt üblicherweise zwischen 200 Hz und 5 kHz.

In Figur 3 ist zu erkennen, dass die Kommutierungen 3, 4 und 6, 7 durch die Steuereinrichtung C unterdrückt wurden. Für die Kommutierung 5 hat die Steuereinrichtung C die Unterdrückung aufgehoben. Damit werden die Elektrodenspitzen der beiden Elektroden symmetrisch abgeschmolzen.

In Figur 4 ist im Vergleich zur Figur 3 zusätzlich die Kommutierung 8 unterdrückt. Damit werden die Elektrodenspitzen der beiden Elektroden unsymmetrisch abgeschmolzen. Die Elektrodenspitze, die während der unterdrückten Kommutierungen 6, 7 und 8 die Anode bildet, wird stärker abgeschmolzen. Damit können Unsymmetrien unter den Elektroden ausgeglichen werden. Es kann damit auch gezielt diejenige Elektrodenspitze stärker abgeschmolzen werden, die mehr zu Flackererscheinungen beiträgt.

## Patentansprüche

1. Schaltungsanordnung zum Betrieb einer Hochdruck-Entladungslampe wobei die Schaltungsanordnung eine Kommutierungseinrichtung umfasst, die einen Eingang aufweist, der mit einer Gleichstromquelle gekoppelt ist und einen Ausgang aufweist, der mit einer Entladungslampe koppelbar ist,
wobei die Kommutierungseinrichtung so gestaltet ist, dass sie die Gleichstromquelle mit dem Ausgang koppelt und die Polarität mit der die Gleichstromquelle mit dem Ausgang gekoppelt ist, durch eine Steuereinrichtung kommutierbar ist,
wobei die Steuereinrichtung einen Sync-Eingang aufweist und die Polarität der Gleichstromquelle synchron zu Sync-Impulsen eines am Sync-Eingang anlegbaren Sync-Signals kommutiert,
wobei die Steuereinrichtung einen Messeingang aufweist, der mit einer Messeinrichtung gekoppelt ist, die dazu ausgelegt ist, einen Messwert zu liefern, der ein Maß für die Größe von Elektrodenspitzen ist,
wobei die Steuereinrichtung **dadurch gekennzeichnet ist,**
**dass** sie mindestens eine Kommutierung unterdrückt, falls der Messwert einen vorgegebenen Schwellwert über- oder unterschreitet.

2. Schaltungsanordnung gemäß Anspruch 1
**dadurch gekennzeichnet, dass** der Messwert ein zu einer Lampenspannung einer Entladungslampe proportionalen Wert ist und die Steuereinrichtung mindestens eine Kommutierung unterdrückt, falls der Messwert einen vorgegebenen Schwellwert unterschreitet.

3. Schaltungsanordnung gemäß Anspruch 1 oder 2
**dadurch gekennzeichnet, dass** die Steuereinrichtung eine Kommutierung unterdrückt, solange der Messwert den vorgegebenen Schwellwert über- oder unterschreitet.

4. Schaltungsanordnung gemäß Anspruch 1 oder 2
**dadurch gekennzeichnet, dass** die Steuereinrichtung eine Kommutierung während einer vorgegebenen DC-Zeit unterdrückt, sobald der Messwert den vorgegebenen Schwellwert durchschreitet.

5. Schaltungsanordnung gemäß Anspruch 1 oder 2
**dadurch gekennzeichnet, dass** die Steuereinrichtung eine vorgegebene Anzahl N von Kommutierungen unterdrückt, sobald der Messwert den vorgegebenen Schwellwert durchschreitet.

6. Schaltungsanordnung gemäß einem der Ansprüche 1 - 5
**dadurch gekennzeichnet, dass** die Steuereinrichtung die Unterdrückung der Kommutierung für jede n-te Kommutierung aufhebt, wobei n eine natürliche Zahl größer 2 ist.

7. Schaltungsanordnung gemäß Anspruch 1 oder 2
**dadurch gekennzeichnet, dass** die Steuereinrichtung jede m-te Kommutierungen unterdrückt, sobald der Messwert den vorgegebenen Schwellwert durchschreitet, wobei m eine vorgegebene natürliche Zahl ist.

8. Schaltungsanordnung gemäß einem der obigen Ansprüche,
**dadurch gekennzeichnet, dass** die Steuereinrichtung eine Speichereinrichtung umfasst, die speichert, welche Elektrode bei einer Folge von unterdrückten Kommutierungen Anode ist und bewirkt, dass die darauf folgende Folge von unterdrückten Kommutierungen dann startet dann, wenn gerade die andere Elektrode Anode ist.

9. Schaltungsanordnung gemäß einem der obigen Ansprüche,
**dadurch gekennzeichnet, dass** die Steuereinrichtung anstatt der Unterdrückung einer Kommutierung zwei Kommutierungen bewirkt, die einen zeitlichen Abstand von maximal 30 Mikrosekunden zueinander aufweisen.

10. Schaltungsanordnung gemäß einem der obigen Ansprüche,
**dadurch gekennzeichnet, dass** die Steuereinrichtung einen Microcontroller umfasst, wobei die Funktionen der Steuereinrichtung durch ein Softwareprogramm im Microcontroller festgelegt sind.

11. Computer-Programm-Produkt, **dadurch gekennzeichnet, dass** es das Softwareprogramme gemäß Anspruch 10 umfasst.

12. Schaltungsanordnung gemäß einem der obigen Ansprüche,
**dadurch gekennzeichnet, dass** die Entladungslampe eine Höchstdruck-Entladungslampe ist.

13. Projektionseinrichtung mit einer Schaltungsanordnung gemäß einem der obigen Ansprüche,
**gekennzeichnet, durch** ein Farbrad, das so angeordnet und gestaltet ist, dass es ein von der Entladungslampe ausgehendes weißes Licht in eine zeitliche Abfolge von Licht mit mindesten drei verschiedenen Farben umwandelt,
wobei der Zeitpunkt der Sync-Impulse so gewählt ist, dass er synchron zur Umdrehung des Farbrades auftritt.

14. Verfahren zum Betrieb einer Hochdruckt Entladungslampe mit folgenden Schritten:
-- Bereitstellen einer Messeinrichtung, die dazu ausgelegt ist, einen Messwert zu liefern, der ein Maß für die Größe von Elektrodenspitzen ist
-- Koppeln einer Entladungslampe an eine Gleichstromquelle über eine Kommutierungseinrichtung,
-- Kommutieren der Polarität der Gleichstromquelle mit Hilfe der Kommutierungseinrichtung synchron zu Sync-Impulsen eines Sync-Signals
-- Vergleichen des Messwerts mit einem Schwellwert,
-- Unterdrücken der Kommutierung der Polarität der Gleichstromquelle für den Fall, dass der Messwert den Schwellwert durchschritten hat.

15. Softwareprogramm **dadurch gekennzeichnet, dass** es eine Schaltungsanordnung derart steuert, dass das Verfahren gemäß Anspruch 14 abläuft.

## Claims

1. Circuit arrangement for operating a high pressure discharge lamp, wherein the circuit arrangement comprises a commutation device, which has an input which is coupled to a DC source, and has an output which can be coupled to a discharge lamp,
wherein the commutation device is designed in such a way that it couples the DC source to the output, and the polarity at which the DC source is coupled to the output can be commutated by a control device,
wherein the control device has a sync input, and the polarity of the DC source is commutated in synchronism with sync pulses of a sync signal which can be applied at the sync input,
wherein the control device has a measuring input, which is coupled to a measuring device which is designed to provide a measured value which is a measure of the size of electrode peaks,
wherein the control device is **characterized**
**in that** it suppresses at least one commutation if the measured value overshoots or undershoots a predetermined threshold value.

2. Circuit arrangement according to Claim 1,
**characterized in that** the measured value is a value which is proportional to a lamp voltage of a discharge lamp, and
the control device suppresses at least one commutation if the measured value undershoots a predetermined threshold value.

3. Circuit arrangement according to Claim 1 or 2, **characterized in that** the control device suppresses a commutation as long as the measured value overshoots or undershoots the predetermined threshold value.

4. Circuit arrangement according to Claim 1 or 2, **characterized in that** the control device suppresses a commutation during a predetermined DC time as soon as the measured value passes through the predetermined threshold value.

5. Circuit arrangement according to Claim 1 or 2, **characterized in that** the control device suppresses a predetermined number N of commutations as soon as the measured value passes through the predetermined threshold value.

6. Circuit arrangement according to one of Claims 1 - 5, **characterized in that** the control device cancels the suppression of the commutation for every n-th commutation, where n is a natural number greater than 2.

7. Circuit arrangement according to Claim 1 or 2, **characterized in that** the control device suppresses every m-th commutation as soon as the measured value passes through the predetermined threshold value, where m is a predetermined natural number.

8. Circuit arrangement according to one of the above claims, **characterized in that** the control device comprises a memory device which stores which electrode is the anode in a sequence of suppressed commutations and causes the subsequent sequence of suppressed commutations to start when precisely the other electrode is the anode.

9. Circuit arrangement according to one of the above claims, **characterized in that** the control device, instead of suppressing a commutation, causes two commutations which are temporally spaced apart from one another by a maximum of 30 microseconds.

10. Circuit arrangement according to one of the above claims, **characterized in that** the control device comprises a microcontroller, the functions of the control device being fixed by a software program in a microcontroller.

11. Computer program product, **characterized in that** it comprises the software program according to Claim 10.

12. Circuit arrangement according to one of the above claims, **characterized in that** the discharge lamp is an ultra-highpressure discharge lamp.

13. Projection device with a circuit arrangement according to one of the above claims, **characterized by** a color wheel, which is arranged and designed in such a way that it converts a white light emerging from the discharge lamp into a temporal sequence of light with at least three different colors, the time of the sync pulses being selected in such a way that it occurs in synchronism with the revolution of the color wheel.

14. Method for operating a high pressure discharge lamp having the following steps of:
-- providing a measuring device which is designed to produce a measured value which is a measure of the size of electrode peaks,
-- coupling a discharge lamp to a DC source via a commutation device,
-- commutating the polarity of the DC source with the aid of the commutation device in synchronism with the sync pulses of a sync signal,
-- comparing the measured value with a threshold value,
-- suppressing the commutation of the polarity of the DC source for the case in which the measured value has passed through the threshold value.

15. Software program, **characterized in that** it controls a circuit arrangement in such a way that the method according to Claim 14 is executed.

## Revendications

1. Agencement de circuit destiné au fonctionnement d'une lampe à décharge à haute pression, l'agencement de circuit comprenant un dispositif de commutation, lequel présente une entrée qui est connectée à une source de courant continu et une sortie qui peut être connectée à une lampe à décharge, le dispositif de commutation étant conçu de telle sorte qu'il connecte la source de courant continu à la sortie et que la polarité avec laquelle la source de courant continu est connectée à la sortie est commutable par un dispositif de commande,
le dispositif de commande présentant une entrée de synchronisation et commutant la polarité de la source de courant continu en synchronisme avec des impulsions de synchronisation d'un signal de synchronisation applicable à l'entrée de synchronisation,
le dispositif de commande présentant une entrée de mesure qui est connectée à un dispositif de mesure, lequel est conçu pour fournir une valeur de mesure qui est une mesure de la grandeur de pointes d'électrodes,
le dispositif de commande étant **caractérisé**
**en ce qu'**il supprime au moins une commutation si la valeur de mesure est supérieure ou inférieure à une valeur seuil prédéterminée.

2. Agencement de circuit selon la revendication 1, **caractérisé en ce que** la valeur de mesure est une valeur proportionnelle à une tension de lampe d'une lampe à décharge et le dispositif de commande supprime au moins une commutation si la valeur de mesure est inférieure à une valeur seuil prédéterminée.

3. Agencement de circuit selon la revendication 1 ou 2, **caractérisé en ce que** le dispositif de commande supprime une commutation tant que la valeur de mesure est supérieure ou inférieure à la valeur seuil prédéterminée.

4. Agencement de circuit selon la revendication 1 ou 2, **caractérisé en ce que** le dispositif de commande supprime une commutation pendant une durée CC prédéterminée dès que la valeur de mesure dépasse la valeur seuil prédéterminée.

5. Agencement de circuit selon la revendication 1 ou 2, **caractérisé en ce que** le dispositif de commande supprime un nombre prédéterminé N de commutations dès que la valeur de mesure dépasse la valeur seuil prédéterminée.

6. Agencement de circuit selon l'une des revendications 1 - 5, **caractérisé en ce que** le dispositif de commande annule la suppression de la commutation pour chaque nième commutation, n étant un entier naturel supérieur à 2.

7. Agencement de circuit selon la revendication 1 ou 2, **caractérisé en ce que** le dispositif de commande annule chaque mième commutation dès que la valeur de mesure dépasse la valeur seuil prédéterminée, m étant un entier naturel prédéterminé.

8. Agencement de circuit selon l'une des revendications précédentes,
**caractérisé en ce que** le dispositif de commande comprend un dispositif de mémoire qui mémorise quelle électrode est l'anode dans une succession de commutations supprimées et qui fait en sorte que la succession suivante de commutations supprimées démarre lorsque précisément l'autre électrode est l'anode.

9. Agencement de circuit selon l'une des revendications précédentes,
**caractérisé en ce que** le dispositif de commande, au lieu de supprimer une commutation, engendre deux commutations qui sont séparées l'une de l'autre par un intervalle de temps de 30 microsecondes au maximum.

10. Agencement de circuit selon l'une des revendications précédentes,
**caractérisé en ce que** le dispositif de commande comprend un microcontrôleur, les fonctions du dispositif de commande étant définies dans le microcontrôleur par un programme logiciel.

11. Produit de programme informatique, **caractérisé en ce qu'**il comprend le programme logiciel selon la revendication 10.

12. Agencement de circuit selon l'une des revendications précédentes,
**caractérisé en ce que** la lampe à décharge est une lampe à décharge à très haute pression.

13. Dispositif de projection doté d'un agencement de circuit selon l'une des revendications précédentes,
**caractérisé par** une roue chromatique, disposée et conçue de telle sorte qu'elle convertit une lumière blanche émanant de la lampe à décharge en une suite temporelle de lumière comprenant au moins trois couleurs différentes,
le moment des impulsions de synchronisation étant choisi de telle sorte qu'il se produit en synchronisme avec la rotation de la roue chromatique.

14. Procédé de fonctionnement d'une lampe à décharge à haute pression comprenant les étapes suivantes :
-- mettre à disposition un dispositif de mesure, lequel est conçu pour fournir une valeur de mesure qui est une mesure de la grandeur de pointes d'électrodes,
-- connecter une lampe à décharge à une source de courant continu au moyen d'un dispositif de commutation,
-- commuter la polarité de la source de courant continu, à l'aide du dispositif de commutation, en synchronisme avec des impulsions de synchronisation d'un signal de synchronisation,
-- comparer la valeur de mesure avec une valeur seuil,
-- supprimer la commutation de la polarité de la source de courant continu dans le cas où la valeur de mesure a dépassé la valeur seuil.

15. Programme logiciel, **caractérisé en ce qu'**il commande un agencement de circuit de sorte que se déroule le procédé selon la revendication 14.
